# EUROPÄISCHE PATENTSCHRIFT

(11) **EP 2 992 035 B1**
(45) Veröffentlichungstag und Bekanntmachung des Hinweises auf die Patenterteilung: **04.11.2020**
(21) Anmeldenummer: 14724349.7
(22) Anmeldetag: 30.04.2014
(51) Int. Cl.: C08G 69/06, C08G 69/30, C08L 77/06

(54) **VERFAHREN ZUR HERSTELLUNG VON HOCHVISKOSEN POLYAMIDEN**
METHOD FOR THE PREPARATION OF HIGH VISCOSITY POLYAMIDES
PROCÉDÉ DE FABRICATION DE POLYAMIDES DE HAUTE VISCOSITÉ

(30) Priorität: 02.05.2013 EP 13166227
(43) Veröffentlichungstag der Anmeldung: 09.03.2016
(73) Patentinhaber: BASF SE, 67056 Ludwigshafen am Rhein (DE)
(72) Erfinder: HÄFFNER, Rüdiger, 67434 Neustadt (DE); GRÜTZNER, Rolf-Egbert, 07407 Rudolstadt (DE); STAMMER, Achim, 67251 Freinsheim (DE); ULZHÖFER, Angela, 67065 Ludwigshafen (DE)
(74) Vertreter: BASF IP Association
(86) Internationale Anmeldenummer: PCT/EP2014/058797
(87) Internationale Veröffentlichungsnummer: WO 2014/177603

(56) Entgegenhaltungen:
- WO-A1-2012/031950
- GB-A- 1 305 246
- US-A- 5 234 644
- US-A- 5 663 284
- DATABASE WPI Week 198638 Thomson Scientific, London, GB; AN 1986-248777 -& JP S61 176628 A (ASAHI CHEM IND CO LTD) 8 August 1986 (1986-08-08)

## Beschreibung

### HINTERGRUND DER ERFINDUNG

Die vorliegende Erfindung betrifft ein Verfahren zur Synthese eines hochviskosen Polyamids, ein damit herstellbares Polyamid und dessen Verwendung.

### STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Unter den Polyamiden ist das Polyamid 6 (Polycaprolactam) mit einem Anteil von etwa 57 % das am meisten hergestellte Polymer. Das klassische Verfahren zur Herstellung von Polyamid 6 ist die hydrolytische Polymerisation von ε-Caprolactam, die immer noch von sehr großer technischer Bedeutung ist. Auf diese Weise lassen sich weitere wichtige Polyamide durch ringöffnende Polymerisation herstellen. Konventionelle hydrolytische Herstellverfahren sind z. B. in Ullmann's Ecyclopedia of Industrial Chemistry, Online Ausgabe 15.03.2003, Vol. 28, S. 552-553 und Kunststoffhandbuch, ¾ Technische Thermoplaste: Polyamide, Carl Hanser Verlag, 1998, München, S. 42-47 und 65-70 beschrieben.

Ein weiteres wichtiges Verfahren, das beispielsweise zur Herstellung von aliphatischen und teilaromatischen Polyamiden eingesetzt wird, beginnt mit der Bildung einer wässrigen Salzlösung aus wenigstens einem Diamin und wenigstens einer Dicarbonsäure sowie optional weiteren Monomerkomponenten, wie Lactamen, ω-Aminosäuren, Monoaminen, Monocarbonsäuren, etc. An die Bildung der Salzlösung schließt sich dann eine Oligomerisierung in der flüssigen wässrigen Phase an. Für den angestrebten Molekulargewichtsaufbau wird im Verlauf des weiteren Verfahrens die Reaktionstemperatur erhöht und Wasser entfernt.

Für viele Anwendungen, z. B. die Herstellung von flexiblen Folien für Verpackungen, werden Polyamide mit höheren Molekulargewichten benötigt, die durch die hydrolytische Polymerisation alleine nicht erreicht werden. Es ist bekannt, zur Erhöhung des Molekulargewichts bzw. der Viskosität des Polyamids im Anschluss an die erste Polymerisation und in der Regel eine Aufarbeitung des so erhaltenen Präpolymers durch Extraktion und Trocknung eine Nachkondensation durchzuführen. Dabei liegt das Polyamid vorzugsweise in der festen Phase vor (Festphasennachpolymerisation, Festphasenkondensation). Dazu kann ein Polyamidgranulat bei Temperaturen unterhalb des Schmelzpunktes des Polyamids getempert werden, wobei vor allem die Polykondensation fortschreitet. Dies führt zum Aufbau des Molekulargewichtes und damit zur Erhöhung der Viskositätszahl des Polyamids.

Es besteht ein Bedarf an verarbeitungsstabilen Polyamiden, d. h. an Polyamiden, die sich während der Schmelzverarbeitung z. B. zu Folien, Monofilamenten, Fasern oder anderen Produkten durch einen verringerten Viskositätsabbau sowie eine geringere Neigung zur Depolymerisation und speziell der Freisetzung von Monomeren, wie z. B. ε-Caprolactam, auszeichnen. So sind die Polyamide speziell bei der Folienherstellung aggressiven Verarbeitungsbedingungen ausgesetzt.

Folien für flexible Verpackungen aus Polyamiden, wie Polyamid 6 und Polyamid 6 66, können durch Schmelzextrusion sowohl als Flachfolien (via Breitschlitzdüse) als auch als Blasfolien (via Ringdüsen) hergestellt werden, wobei in Abhängigkeit von der Anlagengröße und dem Durchsatz hohe Scherkräfte auf die Polyamidschmelze wirken. Die bevorzugt eingesetzten Polyamide weisen eine hohe Viskosität auf (relative Viskosität RV in 96%iger Schwefelsäure von etwa 3,3 bis 5,0) und sind sensibel gegenüber einem Molekulargewichtsabbau. Dieser kann zum einen darauf beruhen, dass Monomer und Polymer sich in einem chemischen Gleichgewicht befinden und unter den Verarbeitungsbedingungen somit auch die Rückreaktion zur Polymerisation abläuft, zum anderen auf thermischem Abbau. In beiden Fällen kommt es zur Bildung von Monomeren, speziell von ε-Caprolactam, welche entweder gasförmig in die Umgebung entweichen oder sich an gekühlten Anlagenteilen als Ablagerungen niederschlagen. Trotz hochentwickelter Absaugsysteme, insbesondere an Flachfolienanlagen, kommt es zu Düsen- bzw. Chill-roll-Ablagerungen, die nach einer bestimmten Standzeit Verunreinigungen an der produzierten Folie verursachen und Reinigungsstopps erforderlich machen. Diese Reingungsstopps unterbrechen die Folienfertigung und führen zu einer unbefriedigenden Ausbeute an Fertigprodukt. Thermischer Abbau von hochviskosen Polyamiden führt weiterhin zu einer Reduzierung der durchschnittlichen Kettenlängen. Dieser Prozess verstärkt sich, wie bereits ausgeführt, bei aggressiveren Verarbeitungsbedingungen, wie z. B. höheren Verarbeitungstemperaturen, und limitiert somit den Durchsatz von Anlagen zur Herstellung von Folien.

Zur Herstellung hochviskoser Polyamide mit stabiler Schmelzviskosität wurden verschiedene Verfahren vorgeschlagen. So kann die Festphasennachkondensation durch Zusätze bestimmter Phosphorsäuren oder deren Salze erheblich beschleunigt werden. Nachteilig an diesem Verfahren ist, dass die Polymerisationsreaktion sich auch bei nachfolgenden Verarbeitungsschritten, beispielsweise bei der Extrusion, fortsetzt.

Aus der DE 1 142 696 A1 ist bekannt, dass die Kombination von Phosphorverbindungen mit Alkancarbonsäuren, Alkandicarbonsäuren oder deren Salzen die Schmelzviskosität von Polyamiden vorteilhaft stabilisieren kann, wenn diese mittels Knetern oder Schneckenmaschinen mit den Polyamiden vermischt werden. Diese Kneter oder Schneckenmaschinen verursachen bei der Polyamidsynthese allerdings hohe Kosten.

Die KR 2002-0041589A beschreibt, dass Dicarbonsäuren und Phosphorverbindungen die thermische Stabilität von Polyamiden erhöhen, wenn sie den Monomeren oder dem Präpolymer zugegeben werden. Dies führt allerdings zu Salzablagerungen in der nachfolgenden Extraktion.

Aus der DD 274 823 A1 ist ein Verfahren zur Herstellung von hochviskosen Polyamiden durch Nachpolykondensation niedrig- bzw. mittelviskoser Polyamide mit einem Wasserdampf-Katalysator-Gemisch bekannt. Als Katalysator werden Phosphorsäure bzw. deren Salze verwendet. Beispielsweise wird die Behandlung von Polyamid 6 Granulat mit Phosphorsäure bzw. Natriumdihydrogenphosphat in Dampfatmosphäre beschrieben. Dieses Verfahren erfordert allerdings eine diskontinuierliche Fahrweise in einem separaten Taumeltrockner und eine Verlängerung der Verweilzeit des Granulats durch eine dreißigminütige Behandlung in der Dampfatmosphäre. Es wird weiterhin beschrieben, dass das Zumischen einer wässrigen Phosphorsäurelösung in einem Taumeltrockner bei Raumtemperatur zu einem Produkt mit uneinheitlicher Lösungsviskosität führt. Eine aus diesem Produkt hergestellte Folie weist viele Stippen auf.

Die WO 2012/031950 A1 beschreibt ein Verfahren zur Herstellung von verarbeitungsstabilen Polyamiden, bei dem man ein Polyamid während der Festphasennachkondensation mit einem Gas behandelt, das ein Trägergas, Wasser, eine erste Komponente a), ausgewählt unter Säuren, Anhydriden oder Lactonen, und eine zweite Komponente b), ausgewählt unter Ammoniak oder Aminen, enthält. Konkret wird beschrieben, die Additive in einem Trägergasstrom zu vernebeln und den beladenen Gasstrom durch eine Polyamidschüttung zu leiten. Dieses Verfahren ermöglicht die Herstellung von Polyamiden, welche sich auch bei aggressiveren Verarbeitungsbedingungen durch einen verringerten Viskositätsabbau und eine geringere Rückbildung und Freisetzung der Monomeren auszeichnet. Es ist jedoch noch verbesserungswürdig, da an dem gasdurchströmten Granulat Flüssigkeitströpfchen rasch abgeschieden werden. Bei Anlagen im Produktionsmaßstab wird daher das Additiv nicht gleichmäßig in der Granulatschüttung verteilt.

Die US 5,234,644 beschreibt ein Verfahren zur Herstellung von Polyamid, welches zum einen ein hoches Molekulargewicht aufweist und zum anderen unvernetzt ist. Bei diesem Verfahren wird das Polyamid vor der Festphasennachkondensation mit einem Katalysator, einer anorganischen Phosphorverbindung, imprägniert. Neben den anorganischen Phosphorverbindungen werden keine weiteren Komponenten eingesetzt, die zur Stabilisierung des Molekulargewichts des Polyamids beitragen.

Der vorliegenden Erfindung liegt die Aufgabe zugrunde, ein verbessertes Verfahren zur Herstellung von Polyamiden bereitzustellen, bei dem die zuvor genannten Nachteile vermieden werden. Insbesondere soll es nach diesem Verfahren möglich sein, ein verarbeitungsstabiles Polyamid zur Verfügung zu stellen. Dieses soll sich vorzugsweise durch eine hohe Viskosität und einen geringen Restmonomergehalt auszeichnen. Unter aggressiven Verarbeitungsbedingungen, wie z. B. bei der Folienextrusion, soll es weder zu einer größeren Viskositätserhöhung infolge der zugesetzten Additive noch zu einer größeren Viskositätsverringerung kommen. Die Freisetzung von Monomeren bei der Verarbeitung soll vermieden oder zumindest vermindert werden.

Überraschenderweise wurde nun gefunden, dass diese Aufgabe gelöst wird, wenn man ein Polyamid-Präpolymer einer Festphasennachkondensation unterzieht und das Polyamid-Präpolymer vor und/oder während der Festphasennachkondensation mit einer Zusammensetzung in Kontakt bringt, die als erste Komponente Phosphorsäure oder ein Salz davon und als zweite Komponente ein Verkappungsmittel enthält.

### ZUSAMMENFASSUNG DER ERFINDUNG

Gegenstand der Erfindung ist daher ein Verfahren zur Herstellung von Polyamiden, umfassend eine Festphasennachpolymerisation eines Polyamid-Präpolymers, wobei das Polyamid-Präpolymer vor und/oder während der Festphasennachpolymerisation mit einer wässrigen Zusammensetzung in Kontakt gebracht wird, die mindestens die folgenden Komponenten umfasst:
A) wenigstens eine erste Verbindung, ausgewählt unter Phosphorsäure, vollneutralisierten Salzen der Phosphorsäure, teilneutralisierten Salzen der Phosphorsäure und Gemischen davon, und
B) wenigstens eine von A) verschiedene zweite Verbindung, wobei die Komponente B) Bernsteinsäure oder Bernsteinsäureanhydrid umfasst oder aus Bernsteinsäure oder Bernsteinsäureanhydrid besteht,
und wobei das Inkontaktbringen des Polyamid-Präpolymers mit der wässrigen Zusammensetzung bei einer Temperatur und einem Druck erfolgt, bei denen die wässrige Zusammensetzung flüssig ist, wobei das Molverhältnis der Komponente B zu den reaktiven Gruppen des Präpolymers 1:50 bis 1:5 ist.

Eine bevorzugte Ausführungsform ist ein Verfahren, bei dem man zur Herstellung des Polyamid-Präpolymers
a) eine wässrige Zusammensetzung bereitstellt, die wenigstens eine zur Polyamidbildung geeignete Komponente enthält, die ausgewählt ist unter Salzen aus wenigstens einer Dicarbonsäure und wenigstens einem Diamin, Lactamen, ω-Aminosäuren, Aminocarbonsäurenitrilen und Mischungen davon,
b) die in Schritt a) bereitgestellte Zusammensetzung in einer Polymerisation bei erhöhter Temperatur in Gegenwart von Wasser unter Erhalt eines Polyamid-Präpolymers umsetzt,
c) das in Schritt b) erhaltene Polyamid-Präpolymer einer Formgebung unter Erhalt von Polyamidteilchen unterzieht,
d) gegebenenfalls die in Schritt c) erhaltenen Polyamidteilchen einer Aufarbeitung unterzieht,
e) die in Schritt c) oder die in Schritt d) erhaltenen Polyamidteilchen zur Festphasennachpolymerisation einsetzt.

In einer bevorzugten Ausführungsform wird die wässrige Zusammensetzung auf das Polyamid-Präpolymer aufgesprüht. Nach dieser Ausführungsform erfolgt das Aufsprühen der wässrigen Zusammensetzung insbesondere kontinuierlich.

Ein weiterer Gegenstand der Erfindung ist eine Polyamidzusammensetzung, die durch das zuvor und im Folgenden beschriebene Verfahren erhältlich ist. Diese zeichnet sich durch die spezielle Additivierung der enthaltenen Polyamide mit wenigstens einer ersten Verbindung A) und wenigstens einer zweiten Verbindung B) aus. Sie ist von herausragender Verarbeitungsstabilität. Der Begriff "Additivierung" wird dabei breit verstanden. So kann die erfindungsgemäße Polyamidzusammensetzung die Komponenten A) und/oder B) in unveränderter Form enthalten als auch in Form von bei der Festphasennachpolymerisation gebildeten Reaktionsprodukten.

Ein weiterer Gegenstand der Erfindung ist die Verwendung einer Polyamidzusammensetzung, die durch das zuvor und im Folgenden beschriebene Verfahren erhältlich ist, insbesondere zur Herstellung von Folien, Monofilamenten, Fasern, Garnen oder textilen Flächengebilden.

### DETALIERTE BESCHREIBUNG DER ERINDUNG

Unter einer "Festphasennachpolymerisation" wird im Allgemeinen eine Kondensationsreaktion zur Erhöhung des Molekulargewichts in einem Temperaturbereich oberhalb der Glasübergangstemperatur und unterhalb der Schmelztemperatur des Polyamids verstanden. In diesem Temperaturbereich kann ein unerwünschter thermischer Abbau des Polyamids weitgehend vermieden werden.

Ein Präpolymer bezeichnet im Sinne der Erfindung eine Zusammensetzung, die polymere Verbindungen mit komplementären funktionellen Gruppen enthält, die zu einer Kondensationsreaktion unter Molekulargewichtserhöhung befähigt sind.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymer aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden aus den vorhandenen Monomeren die möglichen Homopolyamidkombinationen gebildet und dann aneinander gehängt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet:

T = Terephthalsäure, I = Isophthalsäure, MXDA = m-Xylylendiamin, IPDA = Isophorondiamin,

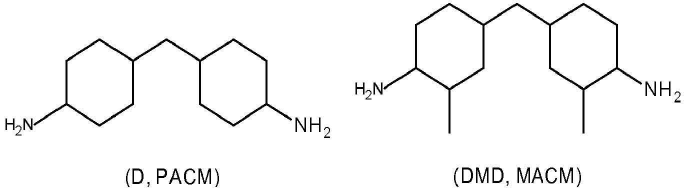

Im Folgenden umfasst der Ausdruck "C₁-C₂₀-Alkyl" unsubstituierte geradkettige und verzweigte C₁-C₂₀-Alkylgruppen. Vorzugsweise handelt es sich um geradkettige oder verzweigte C₁-C₁₀-Alkylgruppen, besonders bevorzugt C₁-C₈-Alkylgruppen und ganz besonders bevorzugt C₁-C₆-Alkylgruppen. Beispiele für C₁-C₁₀-Alkylgruppen sind insbesondere Methyl, Ethyl, Propyl, Isopropyl, n-Butyl, Isobutyl, sec.-Butyl, tert.-Butyl (1,1-Dimethylethyl), n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl, Undecyl, Dodecyl, etc.

Der Ausdruck "C₂-C₁₀-Alkylen" steht im Sinne der vorliegenden Erfindung für geradkettige oder verzweigte Alkandiyl-Gruppen mit vorzugsweise 1 bis 6 Kohlenstoffatomen. Dazu zählen Methylen (-CH₂-), Ethylen (-CH₂-CH₂-), n-Propylen (-CH₂-CH₂-CH₂-), Iso-propylen (-CH₂-CH(CH₃)-), etc. Analog steht der Ausdruck "C₂-C₆-Alkenylen" für geradkettige oder verzweigte Alkendiyl-Gruppen mit 1 bis 6 Kohlenstoffatomen und einer Doppelbindung. Der Ausdruck "C₂-C₆-Alkinylen" steht für geradkettige oder verzweigte Alkindiyl-Gruppen mit 1 bis 6 Kohlenstoffatomen und einer Dreifachbindung.

Der Ausdruck "C₃-C₈-Cycloalkyl" umfasst im Sinne der vorliegenden Erfindung mono-, bi- oder tricyclische Kohlenwasserstoffreste. Dazu zählen Cyclopropyl, Cyclobutyl, Cyclopentyl, Cyclohexyl, Cycloheptyl, Cyclooctyl, Cyclododecyl, Cyclopentadecyl, Norbornyl oder Adamantyl.

Der Ausdruck "Aryl" umfasst im Sinne der vorliegenden Erfindung mono- oder polycyclische aromatische Kohlenwasserstoffreste. Diese weisen vorzugsweise 6 bis 20 Ringatome, besonders bevorzugt 6 bis 14 Ringatome, insbesondere 6 bis 10 Ringatome, auf. Aryl steht besonders bevorzugt für Phenyl, Naphthyl, Indenyl, Fluorenyl, Anthracenyl, Phenanthrenyl, Naphthacenyl, Chrysenyl, Pyrenyl, Coronenyl, Perylenyl, etc. Insbesondere steht Aryl für Phenyl oder Naphthyl.

Der Ausdruck "C₇-C₂₀-Arylalkyl" bezeichnet Aryl-substituierte Alkylreste. Dabei ist Aryl vorzugsweise wie weiter oben definiert. Vorzugsweise steht Aryl für Phenyl oder Naphthyl. Die Alkylgruppe ist vorzugsweise ein C₁-C₄-Alkyl, wie zuvor definiert. Beispiele für C₇-C₂₀-Arylalkyl sind Benzyl,1-Naphthylmethyl, 2-Naphthylmethyl, Diphenylmethyl, 1-Phenylethyl, 2-Phenylethyl, 1-Phenylpropyl, 2-Phenylpropyl, 3-Phenylpropyl, 1-Methyl-1-phenyl-ethyl, 4-Phenylbutyl, 2,2-Dimethyl-2-phenylethyl, insbesondere Benzyl.

Der Ausdruck "C₈-C₂₀-Alkylarylalkyl" bezeichnet Aryl-substituierte Alkylreste, wobei die Alkylgruppe ihrerseits mit Alkyl substituiert ist. Geeignete Aryl-substituierte Alkylreste sind die zuvor genannten C₇-C₂₀-Arylalkyle. Die Alkylreste am Aryl sind vorzugsweise ausgewählt unter C₁-C₄-Alkyl, wie zuvor definiert. Beispiele für C₈-C₂₀-Alkylarylalkyl sind 2-Methylbenzyl und 2-Methyl-phenylethyl.

Die erfindungsgemäß hergestellten Polyamide zeichnen sich durch eine hohe Viskosität aus. Die Viskosität von Polyamiden kann beispielsweise als Viskositätszahl oder als relative Viskosität angegeben werden.

Die Viskositätszahl (Staudinger-Funktion, bezeichnet mit VZ, VN oder J) ist definiert als VZ = 1 / c x (η - ηₛ) / ηₛ. Die Viskositätszahl steht in direkter Beziehung zur mittleren molaren Masse des Polyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

Die relative Viskosität (RV) wird im Rahmen dieser Erfindung bei 25 °C als Lösung in 96 Gew.-% H₂SO₄ mit einer Konzentration von 1,0 g Polyamid in 100 ml Schwefelsäure bestimmt. Die Bestimmung der relativen Viskosität folgt dabei der EN ISO 307.

Die erfindungsgemäß hergestellten Polyamide weisen vorzugsweise eine Viskositätszahl von 195 bis 321 ml/g, besonders bevorzugt von 218 bis 248 ml/g auf.

Die relative Viskosität der erfindungsgemäß hergestellten Polyamide beträgt vorzugsweise 33 bis 50, besonders bevorzugt 36 bis 40.

Die erfindungsgemäß eingesetzte erste Komponente A) ist befähigt, bei der Nachkondensation des Polyamids als Polymerisationskatalysator zu fungieren.

Die erfindungsgemäß eingesetzte zweite Komponente B) ist befähigt, als Verkappungsmittel (Blockierungsmittel, Endcapper) zu fungieren. Unter einem Verkappungsmittel wird im Sinne der Erfindung eine Verbindung verstanden, die wenigstens eine reaktive Gruppe aufweist, die unter den Bedingungen der Festphasenpolymerisation befähigt ist, mit einer komplementären reaktiven Gruppe des Polyamid-Präpolymers eine Reaktion einzugehen. So kann beispielsweise eine Komponente B, die Carbonsäuregruppen oder Anhydride aufweist mit einer Aminoendgruppe des Präpolymers unter Amidbildung reagieren.

Vorzugsweise wird die Komponente B in einer Menge eingesetzt, dass nicht alle zur Reaktion mit der Komponenten B befähigten reaktiven Gruppen des Präpolymers umgesetzt werden.

Die Menge der Komponente B wird vorzugsweise so gewählt, dass die reaktiven Gruppen des Präpolymers, d. h. die Summe der Aminoendgruppen (AEG) und der Carboxylendgruppen (CEG) nicht vollständig verkappt werden.

Das Molverhältnis der Komponente B zu den reaktiven Gruppen des Präpolymers, d. h. die Summe der Aminoendgruppen (AEG) und der Carboxylendgruppen (CEG) ist erfindungsgemäß 1:50 bis 1:5, besonders bevorzugt 1:30 bis 1:6, insbesondere 1:15 bis 1:7.

Offenbart wird eine erste Ausführungsform, wobei die Komponente B ausgewählt ist unter Säuren, Anhydriden oder Lactonen.

Das Molverhältnis der Komponente B, ausgewählt unter Säuren, Anhydriden oder Lactonen, zu den Aminoendgruppen (AEG) des Präpolymers beträgt vorzugsweise 1:50 bis 1:5, besonders bevorzugt 1:30 bis 1:6, insbesondere 1:15 bis 1:7.

Offenbart wird eine zweite Ausführungsform, wobei die Komponente B ausgewählt ist unter Aminen oder Ammoniak.

Das Molverhältnis der Komponente B, ausgewählt unter Aminen oder Ammoniak, zu den Carboxylendgruppen (CEG) des Präpolymers beträgt vorzugsweise 1:50 bis 1:5, besonders bevorzugt 1:30 bis 1:6, insbesondere 1:15 bis 1:7.

Durch den Einsatz von Säure, Anhydrid oder Lacton oder deren Gemischen als Komponente B) kann eine Verringerung der Aminoendgruppen (AEG) des erhaltenen Polyamids erzielt werden. Durch den Einsatz von Ammoniak oder Amin oder deren Gemischen als Komponente B) kann eine Verringerung der Carboxylendgruppen (CEG) erzielt werden.

Das nach dem erfindungsgemäßen Verfahren erhaltene Polyamid weist vorzugsweise eine Konzentration an Aminendgruppen (AEG) von kleiner gleich 30 meq/kg Polymer, besonders bevorzugt von kleiner gleich 20 meq/kg Polymer, auf.

Das nach dem erfindungsgemäßen Verfahren erhaltene Polyamid weist vorzugsweise eine Konzentration an Carboxylendgruppen (CEG) von kleiner gleich 60 meq/kg Polymer, besonders bevorzugt von kleiner gleich 40 meq/kg Polymer, auf.

In einer bevorzugten Ausführungsform erfolgt das Inkontaktbringen des Polyamid-Präpolymers mit der wässrigen Zusammensetzung bei einer Temperatur und einem Druck, bei denen die wässrige Zusammensetzung flüssig ist. Das Inkontaktbringen erfolgt somit vorzugsweise bei einer Temperatur, die unter der Siedetemperatur von Wasser bei den Behandlungsbedingungen liegt. Wenn das Inkontaktbringen bei Normaldruck erfolgt, liegt die Temperatur also unterhalb von 100 °C. Erfolgt das Inkontaktbringen bei einem höheren oder niedrigeren Druck, so erfolgt es entsprechend bei einer niedrigeren bzw. höheren Maximaltemperatur. Die anschließende Nachpolymerisation kann dann bei abweichenden Druck- und/oder Temperaturbedingungen erfolgen. Bei der Nachpolymerisation liegt die Temperatur in der Reaktionszone bevorzugt in einem Bereich von 120 bis 185 °C, besonders bevorzugt von 130 bis 180 °C. Bei der Nachpolymerisation liegt der Druck in der Reaktionszone üblicherweise in einem Bereich von 1 mbar bis 1,5 bar, besonders bevorzugt von 500 mbar bis 1,3 bar.

Das Polyamid ist vorzugsweise ausgewählt unter PA 6, PA 11, PA 12, PA 46, PA 66, PA 666, PA 69, PA 610, PA 612, PA 96, PA 99, PA 910, PA 912, PA 1212, PA 6T, PA 9T, PA 10T, PA 12T, PA 6I, PA 9I, PA 10I, PA 12I, PA 6T 6I, PA MXD6, PA MACM I, PA MACM T, PA PACM I, PA PACM T und Copolymeren und Gemischen davon.

Das Polyamid ist besonders bevorzugt ausgewählt unter PA 6, PA 66, PA 666, PA 69, PA 610, PA 6T, PA 6I/6T PA 612, PA 11, PA 12, PA 46, PA MXD6 und Copolymeren und Gemischen davon.

Insbesondere handelt es sich bei dem Polyamid um PA 6, PA 66 oder PA 666, ganz besonders bevorzugt um PA 6.

Offenbarungsgemäß umfasst die Komponente B) wenigstens eine Säure, die ausgewählt ist unter Monocarbonsäuren R¹-COOH, Dicarbonsäuren R²-(COOH)₂ und Gemischen davon, worin R¹ für Wasserstoff, C₁- bis C₁₀-Alkyl oder Phenyl steht und R² für eine chemische Bindung, C₁- bis C₁₀-Alkylen oder Phenylen steht.

Als Säuren B) eignen sich insbesondere kurz- und langkettige sowie verzweigte aliphatische oder aromatische Monocarbonsäuren. R¹ steht vorzugsweise für Wasserstoff, Phenyl oder C₁-C₈-Alkyl. R¹ steht besonders bevorzugt für C₁-C₄-Alkyl, wie Methyl, Ethyl, n-Propyl, iso-Propyl, n-Butyl, iso-Butyl, sec.-Butyl oder tert.-Butyl. R¹ steht insbesondere für Ethyl oder n-Propyl. R² steht bevorzugt für C₁-C₉-Alkylen, besonders bevorzugt C₁- bis C₇-Alkylen, insbesondere für C₁-C₃-Alkylen wie Methylen, Ethylen, n-Propylen, iso-Propylen, n-Butylen, iso-Butylen, sec.-Butylen oder tert.-Butylen. Ganz besonders bevorzugt steht R² für Ethylen oder n-Propylen.

Die Säure B) ist bevorzugt ausgewählt unter Ameisensäure, Essigsäure, Propionsäure, Benzoesäure, Pivalinsäure, Bernsteinsäure und Mischungen davon. Die Säure B) ist besonders bevorzugt ausgewählt unter Essigsäure, Propionsäure oder Bernsteinsäure. Erfindungsgemäß handelt es sich bevorzugt bei der Säure B) um Bernsteinsäure.

Als Säuren B) eignen sich weiterhin insbesondere Phosphonsäure, Phosphinsäure sowie Phosphonate, d.h. Phosphonsäure enthaltende Organophosphorverbindungen wie 2-Aminoethylphosphonsäure (AEPN), 1-Hydroxyethyliden-1,1-diphosphonsäure (HEDP), Amino-tris(methylenphosphonsäure) (ATMP), Ethylendiamin-tetra(methylen-phosphonsäure) (EDTMP), Tetramethylendiamin-tetra(methylenphosphonsäure) (TDTMP), Hexamethylendiamin-tetra(methylenphosphonsäure) (HDTMP), Diethylentriamin-penta(methylenphosphon-säure) (DTPMP) und 2-Carboxylethyl-phosphonsäure (CEPA). Bevorzugt sind Phosphonsäure und Diethylentriamin-penta(methylenphos-phonsäure) (DTPMP).

Des Weiteren wird offenbart, dass die Komponente B) wenigstens ein Anhydrid, ausgewählt unter
- aliphatischen Anhydriden R³-C(=O)-O-C(=O)-R⁴, worin R³ und R⁴ unabhängig voneinander für C₁-C₁₀-Alkyl stehen
- alicyclischen oder aromatischen Anhydriden der Formel 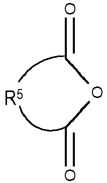 worin R⁵ für C₂-C₆-Alkylen, C₂-C₆-Alkenylen, C₂-C₆-Alkinylen oder einen zweiwertigen, gesättigten oder ein- oder mehrfach ungesättigten oder aromatischen cyclischen Rest steht, und
- Mischungen davon umfasst.

Bevorzugt sind R³ und R⁴ unabhängig voneinander ausgewählt unter C₁- bis C₁₀-Alkyl, besonders bevorzugt C₁-C₈-Alkyl, insbesondere C₁-C₄-Alkyl, wie Methyl, Ethyl, n-Propyl, iso-Propyl, n-Butyl, iso-Butyl, sec.-Butyl oder tert.-Butyl, ganz besonders bevorzugt Methyl oder Ethyl.

R⁵ steht vorzugsweise für ein Alkylen mit 2 bis 6 C-Atomen, bevorzugt 2 bis 4 C-Atomen, besonders bevorzugt 2 bis 3 C-Atomen oder ein Alkenylen mit 2 bis 6 C-Atomen, bevorzugt 2 bis 4 C-Atomen, besonders bevorzugt 2 C-Atomen, oder ein Alkinylen mit 2 bis 6 C-Atomen, bevorzugt 2 bis 4 C-Atomen, besonders bevorzugt 2 C-Atomen. Das Anhydrid ist bevorzugt ausgewählt unter Acetanhydrid, Bernsteinsäureanhydrid, Glutarsäureanhydrid, Maleinsäureanhydrid und Phthalsäureanhydrid. Besonders bevorzugt handelt es sich um Bernsteinsäureanhydrid, Glutarsäureanhydrid oder Maleinsäureanhydrid. Erfindungsgemäß handelt es sich bevorzugt um Bernsteinsäureanhydrid.

Im Rahmen der Offenbarung eignen sich als Lactone B) insbesondere γ-Lactone, δ-Lactone, ε-Lactone und Gemische davon. Bevorzugt sind Butyrolacton, Valerolacton und Caprolacton, besonders bevorzugt Butyrolacton, Caprolacton, ganz besonders bevorzugt Caprolacton.

Im Rahmen der Offenbarung eignen sich als Amine B) insbesondere primäre Amine R⁶-NH₂, sekundäre Amine R⁶R⁷-NH, tertiäre Amine R⁶R⁷R⁸-N, quartäre Amine R⁶R⁷R⁸R⁹-N⁺(X⁻) und Diamine (H₂N)-R¹⁰-(NH₂). Hierin sind R⁶, R⁷, R⁸, R⁹ unabhängig voneinander C₁- bis C₂₀-Alkyl, bevorzugt C₁- bis C₁₀-Alkyl, besonders bevorzugt C₁- bis C₆-Alkyl wie Methyl, Ethyl, n-Propyl und Isopropyl, C₃- bis C₈-Cycloalkyl wie Cyclopropyl, Cyclobutyl, Cyclopentyl, Cyclohexyl, Cycloheptyl und Cyclooctyl, besonders bevorzugt Cyclopentyl, Cyclohexyl, Cycloheptyl und Cyclooctyl, Aryl wie Phenyl, 1-Naphthyl und 2-Naphthyl, C₇- bis C₂₀-Alkylaryl, bevorzugt C₇- bis C₁₂-Alkylphenyl wie Benzyl und Phenylethyl, C₈- bis C₂₀-Alkylarylalkyl, bevorzugt C₇- bis C₁₆-Alkylphenylalkyl wie 2-Methylbenzyl und 2-Methyl-phenylethyl, besonders bevorzugt C₇- bis C₁₂-Alkylphenylalkyl wie 2-Methylbenzyl. R¹⁰ steht für C₂- bis C₂₀-Alkylen, bevorzugt C₂- bis C₈-Alkylen, besonders bevorzugt C₂- bis C₆-Alkylen, ganz besonders bevorzugt n-Propylen, Isopropylen, n-Butylen, Isobutylen oder tert.-Butylen.

X- steht für ein Anionenäquivalent. Bevorzugt steht X- für Halogen, bevorzugt Fluorid, Chlorid, Bromid oder Jodid, besonders bevorzugt Chlorid oder Bromid, ganz besonders bevorzugt Chlor. Bevorzugt handelt es sich bei den Aminen um C₁- bis C₂₀-Amine, besonders bevorzugt um C₁- bis C₈-Amine wie Methylamin, Dimethylamin, Ethylamin, n-Propylamin, 2-Propylamin, n-Butylamin, prim.-Butylamin, sec.-Butylamin, tert.-Butylamin, n-Pentylamin, 2-Pentylamin, 3-Pentylamin, n-Hexylamin, 2-Hexylamin, 3-Hexylamin, n-Heptylamin, 2-Heptylamin, 3-Heptylamin, 4-Heptylamin, n-Octylamin, 2-Octylamin, 3-Octylamin, Cyclopropylamin, Cyclobutylamin, Cyclopentylamin, Cyclohexylamin, Cycloheptylamin, Cyclooctylamin, 1,1,3,3-Tetramethylbutylamin, N-Ethylmethylamin Dimethylamin, Diethylamin, Di-n-propylamin, Di-iso-propylamin, Di-n-butylamin, Di-sec.-butylamin, Di-n-pentylamin, N-Methylpropylamin, N-Ethylpropylamin, 1,2-Diaminopropan, 1,3-Diaminopropan, 1,2-Diaminobutan, 1,3-Diaminobutan und 1,4-Diaminobutan, besonders bevorzugt Methylamin, Dimethylamin und Cyclohexylamin. Die wässrige Lösung enthält bevorzugt 0,25 Gew.-% bis 1 % Gew.-% Phosphor der ersten Verbindung. Weiterhin enthält die wässrige Lösung bevorzugt 0,25 Gew.-% bis 1 % Gew.-% der zweiten Verbindung.

Das Aufsprühen der wässrigen Lösung erfolgt insbesondere kontinuierlich. Außerdem ist es bevorzugt, dass die wässrige Lösung innerhalb eines Zeitraums von maximal 30 Sekunden, bevorzugt von maximal 10 Sekunden, auf das Polyamid aufgesprüht wird.

Bevorzugt wird die wässrige Lösung mechanisch auf der Oberfläche des Polyamids verteilt. Besonders bevorzugt erfolgt die mechanische Verteilung mittels Misch- und Dispergierelementen, wie z. B. Schaufeln, Wendeln, Scheiben, Haken. Bevorzugt wird ein Schaufelmischer eingesetzt.

### Herstellungsverfahren

Die Bereitstellung des Polyamids erfolgt vorzugsweise durch ein Verfahren, das die Schritte a) bis e), wie zuvor beschrieben, umfasst.

### Schritt a)

In Schritt a) wird eine wässrige Zusammensetzung bereitgestellt, die wenigstens eine zur Polyamidbildung geeignete Komponente enthält, die ausgewählt ist unter Salzen aus wenigstens einer Dicarbonsäure und wenigstens einem Diamin, Lactamen, ω-Aminosäuren, Aminocarbonsäurenitrilen und Mischungen davon. Die zur Herstellung der Polyamide eingesetzte wässrige Zusammensetzung kann zusätzlich wenigstens ein zur Polyamidbildung geeignetes Comonomer enthalten, vorzugsweise ausgewählt unter ω-Aminocarbonsäureamiden, ω-Aminocarbonsäureestern, Dinitrilen und Mischungen davon.

Das in Schritt a) bereitgestellte Monomergemisch enthält vorzugsweise wenigstens ein C₅- bis C₁₂-Lactam und/oder ein Oligomer davon. Die Lactame sind insbesondere ausgewählt unter ε-Caprolactam, 2-Piperidon (δ-Valerolatam), 2-Pyrrolidon (γ-Butyrolactam), Capryllactam, Önanthlactam, Lauryllactam, deren Mischungen und Oligomeren davon. Besonders bevorzugt wird in Schritt a) ein Monomergemisch bereitgestellt, das ε-Caprolactam enthält. Insbesondere wird in Schritt a) ein Monomergemisch bereitgestellt, das ausschließlich ε-Caprolactam als Monomerkomponente enthält. Weiterhin ist es auch möglich, dass in Schritt a) ein Monomergemisch bereitgestellt wird, das zusätzlich zu wenigstens einem Lactam wenigstens ein damit copolymerisierbares Monomer (M) enthält.

Geeignete Monomere (M) sind Dicarbonsäuren, beispielsweise aliphatische C₄₋₁₀-alpha, omega-Dicarbonsäuren, wie Bernsteinsäure, Glutarsäure, Adipinsäure, Pimelinsäure, Korksäure, Acelainsäure, Sebacinsäure und Dodecandisäure. Auch aromatische C₈₋₂₀-Dicarbonsäuren, wie Terephthalsäure und Isophthalsäure, können eingesetzt werden.

Als Monomere (M) geeignete Diamine können α,ω-Diamine mit vier bis zehn Kohlenstoffatomen, wie Tetramethylendiamin, Pentamethylendiamin, Hexamethylendiamin, Heptamethylendiamin, Octamethylendiamin, Nonamethylendiamin und Decamethylendiamin eingesetzt werden. Besonders bevorzugt ist Hexamethylendiamin.

Unter den als Monomere (M) geeigneten Salzen der genannten Dicarbonsäuren und Diaminen ist insbesondere das Salz aus Adipinsäure und Hexamethylendiamin, so genanntes AH-Salz, bevorzugt.

Geeignete Monomer (M) sind auch Lactone. Bevorzugte Lactone sind beispielsweise ε-Caprolacton und/oder γ-Butyrolacton.

Bei der Herstellung der Polyamide können ein oder mehrere Kettenregler eingesetzt werden, beispielsweise aliphatische Amine oder Diamine, wie Triacetondiamin, bzw. Mono- oder Dicarbonsäure, wie Propionsäure und Essigsäure, oder aromatische Carbonsäuren, wie Benzoesäure oder Terephthalsäure.

Die in dem erfindungsgemäßen Verfahren hergestellten Polyamide können zusätzlich übliche Additive, wie Mattierungsmittel, z. B. Titandioxid, Keimbildner, z. B. Magnesiumsilicat, Stabilisatoren, z. B. Kupfer(I)halogenide und Alkalihalogenide, Antioxidantien, Verstärkungsmittel, etc., in üblichen Mengen enthalten. Die Additive werden in der Regel vor, während oder nach der hydrolytischen Polymerisation (Schritt b) zugesetzt. Bevorzugt werden die Additive vor der hydrolytischen Polymerisation in Schritt b) zugesetzt.

### Schritt b)

Die Umsetzung der in Schritt a) bereitgestellten Zusammensetzung in Schritt b) kann nach üblichen, dem Fachmann bekannten Verfahren erfolgen. Derartige Verfahren, z. B. zur Schmelzepolymerisation sind z. B. im Kunststoff Handbuch, ¾ Technische Thermoplaste: Polyamide, Carl Hanser Verlag, 1998, München beschrieben. Auf diese Offenbarung wird hier in vollem Umfang Bezug genommen.

In einer speziellen Ausführung wird in Schritt b) eine lactamhaltige Zusammensetzung in einer hydrolytischen Polymerisation umgesetzt. Ein solches Verfahren wird z. B. im Kunststoff Handbuch, ¾ Technische Thermoplaste: Polyamide, Carl Hanser Verlag, 1998, München, S. 42-47 und 65-70 beschrieben.

Bevorzugt wird in Schritt b) zur hydrolytischen Polymerisation ein Lactam einer Ringöffnung unter Einwirkung von Wasser unterzogen. Dabei wird z. B. das Lactam zumindest teilweise zur korrespondierenden Aminocarbonsäure gespalten, die dann im Folgeschritt durch Polyaddition und Polykondensation weiter polymerisiert. Wird nach einer bevorzugten Ausführungsform in Schritt a) ein Monomergemisch bereitgestellt, das Caprolactam enthält, so wird dieses unter der Einwirkung von Wasser zumindest teilweise zur korrespondierenden Aminocapronsäure geöffnet und reagiert anschließend unter Polykondensation und Polyaddition zum Polyamid 6.

In einer speziellen Ausführung besteht das in Schritt a) bereitgestellte Monomergemisch aus wenigstens einem Lactam und erfolgt die hydrolytische Polymerisation in Schritt b) in Gegenwart von 0,1 bis 4 Gew.-% Wasser, bezogen auf die Gesamtmenge des eingesetzten Lactams. Speziell handelt es sich bei dem Lactam um ε-Caprolactam.

Die Umsetzung in Schritt b) erfolgt vorzugsweise kontinuierlich.

Geeignete Reaktoren sind die zur Herstellung von Polyamiden üblichen, dem Fachmann bekannten Reaktoren. Bevorzugt erfolgt die hydrolytische Polymerisation in Schritt b) in einem Polymerisationsrohr oder einem Bündel von Polymerisationsrohren. Speziell wird für die hydrolytische Polymerisation in Schritt b) wenigstens ein sogenanntes VK-Rohr eingesetzt, wobei es sich um eine senkrecht stehenden Rohrreaktor handelt. Die Abkürzung "VK" steht dabei für "vereinfacht kontinuierlich".

Die hydrolytische Polymerisation in Schritt b) kann einstufig oder mehrstufig (z. B. zweistufig) erfolgen. Bei einer mehrstufigen Ausführung der Umsetzung in Schritt b) erfolgt bevorzugt wenigstens eine der Stufen in einem VK-Rohr. Bei einer zweistufigen Ausführung der Umsetzung in Schritt b) erfolgt bevorzugt die zweite Stufe in einem VK-Rohr. Bei einer zweistufigen Ausführung der Umsetzung in Schritt b) kann die erste Stufe bevorzugt in einem Druckvorreaktor erfolgen.

Die hydrolytische Polymerisation in Schritt b) erfolgt bevorzugt bei einer Temperatur im Bereich von 240 bis 280 °C. Bei einer mehrstufigen Ausführung der hydrolytischen Polymerisation in Schritt b) können die einzelnen Stufen bei der gleichen oder bei unterschiedlichen Temperaturen und Drücken erfolgen. Bei Durchführung einer Polymerisationsstufe in einem Rohrreaktor, speziell einem VK-Rohr, kann der Reaktor über die gesamte Länge im Wesentlichen die gleiche Temperatur aufweisen. Möglich ist auch ein Temperaturgradient im Bereich wenigstens eines Teils des Rohrreaktors. Möglich ist auch die Durchführung der hydrolytischen Polymerisation in einem Rohrreaktor, der zwei oder mehr als zwei Reaktionszonen aufweist, die bei unterschiedlicher Temperatur und/oder bei unterschiedlichem Druck betrieben werden. Der Fachmann kann die optimalen Bedingungen nach Bedarf, z. B. unter Berücksichtigung der Gleichgewichtsbedingungen, wählen.

Wenn die hydrolytische Polymerisation in Schritt b) einstufig erfolgt, so liegt der absolute Druck im Polymerisationsreaktor bevorzugt in einem Bereich von etwa 1 bis 10 bar, besonders bevorzugt von 1,01 bar bis 2 bar. Besonders bevorzugt wird die einstufige Polymerisation bei Umgebungsdruck durchgeführt.

In einer bevorzugten Ausführung wird die hydrolytische Polymerisation in Schritt b) zweistufig durchgeführt. Durch das Vorschalten einer sogenannten Druckstufe lässt sich eine Verfahrensbeschleunigung erreichen, indem die geschwindigkeitsbestimmende Spaltung des Lactams, speziell von Caprolactam, unter erhöhtem Druck unter ansonsten ähnlichen Bedingungen wie in der zweiten Reaktionsstufe durchgeführt wird. Die zweite Stufe erfolgt dann vorzugsweise in einem VK-Rohr, wie zuvor beschrieben. Bevorzugt liegt der absolute Druck in der ersten Stufe in einem Bereich von etwa 1,5 bis 70 bar, besonders bevorzugt in einem Bereich von 2 bis 30 bar. Bevorzugt liegt der absolute Druck in der zweiten Stufe in einem Bereich von etwa 0,1 bis 10 bar, besonders bevorzugt von 0,5 bar bis zu 5 bar. Insbesondere liegt der Druck in der zweiten Stufe bei Umgebungsdruck.

### Schritt c)

In Schritt c) des erfindungsgemäßen Verfahrens wird das in Schritt b) erhaltene Polyamid-Präpolymer einer Formgebung unter Erhalt von Polyamidteilchen unterzogen.

Bevorzugt wird das in Schritt b) erhaltene Polyamid-Präpolymer zuerst zu einem oder mehreren Strängen geformt. Dazu können dem Fachmann bekannte Vorrichtungen verwendet werden. Geeignete Vorrichtungen sind z. B. Lochplatten, Düsen oder Düsenplatten. Bevorzugt wird das in Schritt b) erhaltene Reaktionsprodukt in fließfähigem Zustand zu Strängen geformt und als fließfähiges strangförmiges Reaktionsprodukt einer Zerkleinerung zu Polyamidteilchen unterzogen. Der Lochdurchmesser liegt vorzugsweise in einem Bereich von 0,5 mm bis 20 mm, besonders bevorzugt 1 mm bis 5 mm, ganz besonders bevorzugt 1,5 bis 3 mm.

Bevorzugt umfasst die Formgebung in Schritt c) eine Granulierung. Zum Granulieren kann das in Schritt b) erhaltene, zu einem oder mehreren Strängen geformte, Polyamid-Präpolymer verfestigt und anschließend granuliert werden. In z. B. Kunststoffhandbuch, ¾ Technische Thermoplaste: Polyamide, Carl Hanser Verlag, 1998, München, S. 68-69 werden geeignete Maßnahmen beschrieben. Ein spezielles Verfahren der Formgebung ist die Unterwassergranulation, die dem Fachmann ebenfalls prinzipiell bekannt ist.

### Schritt d)

Für viele Verwendungszwecke, z. B. zur Herstellung von Folien für Verpackungsmaterialien, ist ein geringerer Restmonomerengehalt im Polyamid erforderlich. In einer speziellen Ausführungsform des erfindungsgemäßen Verfahrens wird das in Schritt c) erhaltene Polyamid-Präpolymer vor seiner Weiterverarbeitung im Allgemeinen einer zumindest teilweisen Entfernung von Monomeren und/oder Oligomeren unterzogen.

Bevorzugt umfasst die Aufarbeitung in Schritt d) eine Extraktion und/oder eine Trocknung.

Zur Verringerung des Gehalts an niedermolekularen Komponenten kann das in Schritt c) erhaltene Granulat roher Polyamidteilchen mit einem Extraktionsmittel extrahiert werden, um enthaltene Monomere und Oligomere zumindest teilweise zu entfernen. Dies erfolgt häufig durch kontinuierliches oder diskontinuierliches Extrahieren mit heißem Wasser, wie es z. B. in der DE 25 01 348 A und DE 27 32 328 A beschrieben ist. Zur Reinigung von rohem Polyamid 6 ist auch die Extraktion mit Caprolactam-haltigem Wasser (WO 99/26996 A2) oder die Behandlung im überhitzten Wasserdampfstrom (EP 0 284 986 A1) bekannt. Aus Gründen des Umweltschutzes und der Wirtschaftlichkeit werden die extrahierten Bestandteile, insbesondere im Fall von Polyamid 6 das Caprolactam und die cyclischen Oligomere, in das Verfahren zurückgeführt. An die Extraktion schließt sich üblicherweise eine Trocknung des extrahierten Polyamids an.

Geeignete Verfahren und Vorrichtungen zur Extraktion von Polyamidteilchen sind dem Fachmann prinzipiell bekannt.

Bevorzugt wird zur Extraktion in Schritt d) ein Extraktionsmittel eingesetzt, das Wasser enthält oder aus Wasser besteht. In einer bevorzugten Ausführung besteht das Extraktionsmittel nur aus Wasser. In einer weiteren bevorzugten Ausführung enthält das Extraktionsmittel Wasser und ein zur Herstellung des Polyamids eingesetztes Lactam und/oder dessen Oligomere. Im Falle von Polyamid 6 ist es somit auch möglich, zur Extraktion caprolactamhaltiges Wasser einzusetzen, wie dies in der WO 99/26996 A2 beschrieben ist. Aus Gründen des Umweltschutzes und der Wirtschaftlichkeit werden die extrahierten Bestandteile, insbesondere im Fall von Polyamid 6 das Caprolactam und die cyclischen Oligomere, in das Verfahren zurückgeführt.

Die Temperatur des Extraktionsmittels liegt vorzugsweise in einem Bereich von 75 bis 130 °C, besonders bevorzugt von 85 bis 120 °C.

Die Extraktion kann kontinuierlich oder diskontinuierlich erfolgen. Bevorzugt ist eine kontinuierliche Extraktion.

Bei der Extraktion können die Polyamidteilchen und das erste Extraktionsmittel im Gleichstrom oder im Gegenstrom geführt werden. Bevorzugt ist die Extraktion im Gegenstrom.

An die Extraktion schließt sich üblicherweise eine Trocknung des extrahierten Polyamids an. Die Trocknung von Polyamiden ist dem Fachmann prinzipiell bekannt. Beispielsweise kann das extrahierte Granulat durch Inkontaktbringen mit trockener Luft oder einem trockenen Inertgas oder einem Gemisch davon getrocknet werden. Bevorzugt wird ein Inertgas, z. B. Stickstoff, zur Trocknung eingesetzt. Das extrahierte Granulat kann auch durch Inkontaktbringen mit überhitztem Wasserdampf oder einem Gemisch davon mit einem davon verschiedenen Gas, vorzugsweise einem Inertgas, getrocknet werden. Zur Trocknung können übliche Trockner, z. B. Gegenstrom-, Kreuzstrom-, Teller-, Taumel-, Schaufel-, Riesel-, Konus-, Schachttrockner, Wirbelbetten usw., verwendet werden. Eine spezielle Ausführung ist die kontinuierliche Trocknung in sogenannten Trockenrohren, die mit einem unter den Trocknungsbedingungen inerten Gas durchströmt werden. In einer speziellen Ausführung wird zur Trocknung wenigstens ein Schachttrockner einsetzt.

Die Trocknung in Schritt d) und die anschließende Festphasennachpolymerisation können auch in einem Schritt kombiniert werden, wobei z. B. in einem dafür genutzten Rohr der Trocknungsprozess in der Regel im oberen Drittel, die Nachkondensation in der Regel in den unteren beiden Dritteln der verfügbaren Rohrlänge unter Ausschluss von Luftsauerstoff erfolgen kann.

### Schritt e)

Bei der Festphasenkondensation liegt das Polyamid vorzugsweise als ein Granulat mit einem Schüttgewicht von 500 bis 900 kg/m³, bevorzugt 600 bis 800 kg/m³, besonders bevorzugt 700 bis 800 kg/m³ vor. Der mittlere Durchmesser der Polyamidteilchen beträgt vorzugsweise 1 bis 4 mm, besonders bevorzugt 1,5 bis 3 mm.

In Schritt e) wird das in Schritt c) oder das Schritt d) erhaltene Polyamid in eine Reaktionszone zur Nachpolymerisation eingespeist. Dabei wird das Polyamid in der festen Phase nachpolymerisiert, d. h. das Polyamid erfährt eine Wärmebehandlung, wobei die Temperatur unterhalb des Schmelzpunktes des Polyamids liegt.

Geeignet als Reaktionszone, in der die Nachpolymerisation stattfindet, sind prinzipiell Vorrichtungen, wie sie auch zur Trocknung eingesetzt werden können, z. B. Gegenstrom-, Kreuzstrom-, Teller-, Taumel-, Schaufel-, Riesel-, Konus-, Schachttrockner, Wirbelbetten usw. Bevorzugt wird als Reaktionszone, in der die Nachpolymerisation stattfindet, wenigstens ein Reaktor eingesetzt, besonders bevorzugt wenigstens ein Rohrreaktor. In einer speziellen Ausführung wird zur Nachpolymerisation wenigstens ein Schachttrockner eingesetzt. Bevorzugt wird der Schachttrockner von einem heißen, unter den Nachpolymerisationsbedingungen inerten Gas durchströmt. Ein bevorzugtes inertes Gas ist Stickstoff.

Geeignete Verfahren zur Nachpolymerisation hydrolytisch hergestellter Polyamide sind dem Fachmann prinzipiell bekannt. Die Nachpolymerisation kann z. B. wie in WO 2009153340, EP 1235671 oder EP 0732351 beschrieben durchgeführt werden.

Die Zugabe der wässrigen Lösung, welche die erste Verbindung und die zweite Verbindung enthält, erfolgt erfindungsgemäß vor und/oder während der Festphasennachkondensation bzw. im kombinierten Trocknungs-/Nachkondensationsrohr.

Das Inkontaktbringen des Polyamid-Präpolymers mit der wässrigen Zusammensetzung kann in der zur Festphasennachpolymerisation eingesetzten Reaktionszone und/oder in einer der Festphasenpolymerisation vorgeschalteten Behandlungszone erfolgen. Die Zuführung der wässrigen Zusammensetzung in die Behandlungszone und/oder die Reaktionszone kann über übliche Vorrichtungen erfolgen. Zur Förderung der wässrigen Zusammensetzung kann beispielsweise eine Pumpe eingesetzt werden. Speziell erfolgt die Zuführung der wässrigen Zusammensetzung über wenigstens eine Düse. Die Dosierung der wässrigen Zusammensetzung kann unter Einsatz einer üblichen Dosiervorrichtung erfolgen. Dazu zählen z. B. Dosierpumpen, Dosierventile, Düsen mit definierter Durchflussmenge, etc. Die Zuführung der wässrigen Zusammensetzung in die Behandlungszone und/oder die Reaktionszone kann über eine oder mehrere Einspeisestellen erfolgen. In der Behandlungszone wird das Polyamid-Präpolymer mit der wässrigen Zusammensetzung vermischt. Dies kann mit Hilfe eines mechanischen Mischers, z. B. einem Schaufelmischer, erfolgen. Es ist aber auch eine Durchmischung ohne aktives Mischorgan möglich, z. B. wenn das Polyamid-Präpolymer durch die Schwerkraft in den nächsten Prozessabschnitt gefördert wird und sich dabei in sich bewegt. Auch eine Zuführung in die Reaktionszone ist möglich.

Auch bei einer Zugabe der wässrigen Zusammensetzung während der Festphasenkondensation kann ein Inkontaktbringen mit dem Polyamid-Präpolymer in einem verhältnismäßig geringen Zeitraum erfolgen, auch wenn die Festphasennachpolymerisation in der Regel deutlich länger dauert. Die Nachpolymerisation findet beispielsweise kontinuierlich in Türmen über mehrere Stunden statt. Hier kann die wässrige Zusammensetzung über eine oder mehrere Einspeisestellen auf das Granulat aufgesprüht werden. Das Wasser der wässrigen Lösungen verdampft während der Nachpolymerisation. Möglich sind auch Verfahren, bei denen die Nachpolymerisation in Batchfahrweise, z. B. in Taumeltrocknern, durchgeführt wird. Hier könnte man die Komponenten A und B als Lösungen zu Beginn der Nachpolymerisation zugeben und durch die Taumelbewegung verteilen.

Die Nachpolymerisation kann einstufig (in einer einzigen Reaktionszone) erfolgen. Sie kann auch mehrstufig, z. B. zweistufig, in mehreren Reaktionszonen erfolgen, die hintereinander und/oder parallel angeordnet sein können. Bevorzugt wird die Nachpolymerisation einstufig durchgeführt.

Bei der Nachpolymerisation liegt die Temperatur in der Reaktionszone bevorzugt in einem Bereich von 120 bis 185 °C, besonders bevorzugt von 150 bis 180 °C.

Bei der Nachpolymerisation liegt der Druck in der Reaktionszone üblicherweise in einem Bereich von 1 mbar bis 1,5 bar, besonders bevorzugt von 500 mbar bis 1,3 bar.

Die Temperierung des Polyamids bei der Nachpolymerisation erfolgt üblicherweise über Wärmeaustauscher, wie Doppelmantel, innenliegende Wärmetauscher oder andere geeignete Vorrichtungen. In einer bevorzugten Ausführungsform erfolgt die Nachpolymerisation in Schritt e) in Gegenwart wenigstens eines Inertgases. Dann kann die Temperierung des Polyamids bei der Nachpolymerisation zumindest teilweise durch den Einsatz eines heißen Inertgases erfolgen. Bevorzugt wird während der Nachpolymerisation die Reaktionszone von heißem Inertgas durchströmt. Als Inertgas eignen sich beispielsweise Stickstoff, CO₂, Helium, Neon und Argon sowie Mischungen davon. Bevorzugt wird Stickstoff eingesetzt.

Die Verweilzeit in der Reaktionszone im Schritt e) beträgt bevorzugt 1 Stunde bis 100 Stunden, besonders bevorzugt 2 Stunden bis 60 Stunden.

Ein erfindungsgemäß hergestelltes Polyamid hoher Viskosität erweist sich in der Regel als besonders verarbeitungsstabil während einer Schmelzeextrusion durch Breitschlitz- oder ringförmige Düsen zu Flach- oder Blasfolien sowie durch ringförmige Düsen kleineren Durchmessers zu Monofilamenten.

In der Regel reduzieren sich bei der erfindungsgemäßen Synthese von Polyamiden, die über ein nicht-equimolares Verhältnis der vorhandenen Endgruppen (Amino- und Carboxylendgruppen) verfügen, die Remonomerisierungsrate bei der Extrusion oder beim Aufschmelzen, die damit verbundene Reduzierung der Viskosität, insbesondere von hochviskosen Polyamidqualitäten sowie der Gehalt an regenerierten Monomeren in der Fertigware wie Folien, Monofilamenten, Fasern oder Teppichen. Die Reduzierung der Aminoendgruppenzahl erweist sich darüber hinaus als vorteilhaft für spinngefärbte Fasern, wobei die Fleckenanfälligkeit, z. B. von daraus hergestellten Teppichen, deutlich abnimmt.

Das erfindungsgemäße Verfahren zur Behandlung der Polyamide während der Festphasennachkondensation hat in der Regel kaum oder keine negativen Auswirkungen auf die notwendige Verweilzeit der Granulate in der Nachkondensationsstufe. Es wird in der Regel im Gegenteil überraschenderweise sogar eine Beschleunigung beobachtet.

Das erfindungsgemäß nachkondensierte Polyamid kann insbesondere zur Herstellung von Folien, Monofilamenten, Fasern, Garnen oder textile Flächengebilden verwendet werden. Hierbei kann der thermische Abbau zu verkürzten Polymerketten bzw. niedrigeren Viskositäten reduziert, die Rückbildung von Monomeren verringert sowie damit verbunden die Anzahl der Reinigungsstopps reduziert und somit die Ausbeute verbessert werden.

Die Erfindung wird nun anhand von Ausführungsbeispielen erläutert:

### BEISPIELE

Der Festphasenpolykondensationsreaktor bestand aus einem beheizten Stahlrohr mit einer Länge von 1000 mm und einem Durchmesser von 100 mm. Das Polyamid 6-Granulat wurde über eine Schleuse von oben zugeführt und über eine Schnecke unten entnommen.

15 kg Granulat wurden mit 7 kg einer Lösung, die die Komponenten A und B enthielt, vermischt. Nach 60 Minuten wurde die Flüssigkeit mittels Fritte/Saugflasche abgetrennt.

Das Rohr wurde mit 5600 g Granulat gefüllt und von unten mit einem 170 °C heißen Stickstoff-Wasserdampf-Gemisch (490 NI/h Stickstoff und 29,7 g/h Wasserdampf) durchströmt. Alle 2 h wurde 330 g Granulat über die Schleuse eingefüllt und 300 g über die Schnecke entnommen. Das Granulat wurde zuvor 2 h in einem Trockenschrank bei 110 °C vorgewärmt und 2 h in der Schleuse bei 160 °C aufgeheizt. Die Ergebnisse sind in der folgenden Tabelle 1 wiedergegeben.

**Tabelle 1**

| VZ des Einsatzstoffs: 144 ml/g | | | | |
|---|---|---|---|---|
| | NaH₂PO₄ [ppm P] | Succinylsäure [ppm] | Monomer [%] | VZ [ml/g] |
| VB1 | - | - | 0,17 | 205 |
| VB2 | 55 | - | 0,17 | 268 |
| VB3 | - | 330 | 0,19 | 213 |
| B1 | 80 | 330 | 0,15 | 253 |

Vergleichsbeispiel VB3 zeigt, dass die alleinige Verwendung eines Endcappers ohne eine Phosphorkomponente zu einem starken Abbau der Viskosität des Polyamids während der Folienextrusion führt.

Aus dem erhaltenen Granulat wurde in einer "Cast Film Line" (120 mm Flachdüse) der Fa. OCS (Witten) bei 270 °C eine Folie erzeugt. Die Ergebnisse sind in der folgenden Tabelle 2 wiedergegeben.

**Tabelle 2**

| # | NaH₂PO₄ | Succinylsäure | Mw vor Folienextrusion | Mw nach Folienextrusion |
|---|---|---|---|---|
| | [ppm P] | [ppm] | [g/mol] | [g/mol] |
| VB4 | - | - | 115000 | 116000 |
| VB5 | 50 | - | 114000 | 137000 |
| B2 | 110 | 330 | 118000 | 118000 |

Die Vergleichsbeispiele VB2 und VB5 zeigen, dass bei Verwendung einer Phosphorkomponente ohne Endcapper das Molekulargewicht und die Viskosität des Polyamids während der Folienextrusion stark ansteigen, was eine individuelle Anpassung jedes Folienextruders an das Produkt notwendig macht.

Den erfindungsgemäßen Beispielen B1 und B2 ist zu entnehmen, dass das erfindungsgemäß hergestellte Polyamid verarbeitungsstabil ist, d. h. ein robustes Verhalten während der Folienextrusion aufweist, welches sich durch einen geringen Viskositätsabbau sowie ein unverändertes Molekulargewicht auszeichnet.

## Patentansprüche

1. Verfahren zur Herstellung von Polyamiden, umfassend eine Festphasennachpolymerisation eines Polyamid-Präpolymers, wobei das Polyamid-Präpolymer vor und/oder während der Festphasennachpolymerisation mit einer wässrigen Zusammensetzung in Kontakt gebracht wird, die mindestens die folgenden Komponenten umfasst:
A) wenigstens eine erste Verbindung, ausgewählt aus der Gruppe, bestehend aus Phosphorsäure, vollneutralisierten Salzen der Phosphorsäure, teilneutralisierten Salzen der Phosphorsäure und Gemischen daraus, und
B) wenigstens eine von A) verschiedene zweite Verbindung, wobei die Komponente B) Bernsteinsäure oder Bernsteinsäureanhydrid umfasst oder aus Bernsteinsäure oder Bernsteinsäureanhydrid besteht,
und wobei das Inkontaktbringen des Polyamid-Präpolymers mit der wässrigen Zusammensetzung bei einer Temperatur und einem Druck erfolgt, bei denen die wässrige Zusammensetzung flüssig ist,
wobei Molverhältnis der Komponente B zu den, reaktiven Gruppen des Präpolymers 1:50 bis 1:5 ist.

2. Verfahren nach Anspruch 1, bei dem man zur Herstellung des Polyamid-Präpolymers
a) eine wässrige Zusammensetzung bereitstellt, die wenigstens eine zur Polyamidbildung geeignete Komponente enthält, die ausgewählt ist unter Salzen aus wenigstens einer Dicarbonsäure und wenigstens einem Diamin, Lactamen, ω-Aminosäuren, Aminocarbonsäurenitrilen und Mischungen davon,
b) die in Schritt a) bereitgestellte Zusammensetzung in einer Polymerisation bei erhöhter Temperatur in Gegenwart von Wasser unter Erhalt eines Polyamid-Präpolymers umsetzt,
c) das in Schritt b) erhaltene Polyamid-Präpolymer einer Formgebung unter Erhalt von Polyamidteilchen unterzieht,
d) gegebenenfalls die in Schritt c) erhaltenen Polyamidteilchen einer Aufarbeitung unterzieht,
e) die in Schritt c) oder die in Schritt d) erhaltenen Polyamidteilchen zur Festphasennachpolymerisation einsetzt.

3. Verfahren nach Anspruch 2, wobei die Aufarbeitung in Schritt d) eine Extraktion und/oder eine Trocknung umfasst.

4. Verfahren nach einem der vorhergehenden Ansprüche, wobei das Polyamid ausgewählt ist unter PA 6, PA 11, PA 12, PA 46, PA 66, PA 666, PA 69, PA 610, PA 612, PA 96, PA 99, PA 910, PA 912, PA 1212, PA 6T, PA 9T, PA 10T, PA 12T, PA 6I, PA 9I, PA 10I, PA 12I, PA 6T 6I, PA MXD6, PA MACM I, PA MACM T, PA PACM I, PA PACM T und Copolymeren und Gemischen davon.

5. Verfahren nach einem der vorhergehenden Ansprüche, wobei die wässrige Zusammensetzung auf das Polyamid-Präpolymer aufgesprüht wird.

6. Verfahren nach Anspruch 5, wobei das Aufsprühen der wässrigen Zusammensetzung kontinuierlich erfolgt.

7. Verfahren nach einem der vorhergehenden Ansprüche, wobei die wässrige Zusammensetzung innerhalb eines Zeitraums von maximal 30 Sekunden, bevorzugt von maximal 10 Sekunden mit dem Polyamid-Präpolymer in Kontakt gebracht wird.

8. Verfahren nach einem der vorhergehenden Ansprüche, wobei die wässrige Lösung mechanisch auf der Oberfläche des Polyamid-Präpolymers verteilt wird.

9. Verfahren nach Anspruch 8, wobei die mechanische Verteilung mittels Misch- und Dispergierelementen, wie z. B. Schaufeln, Wendeln, Scheiben oder Haken, insbesondere mit einem Schaufelmischer, erfolgt.

10. Verfahren nach einem der vorhergehenden Ansprüche, wobei die wässrige Zusammensetzung 0,25 Gew.-% bis 1 Gew.-% wenigstens einer phosphorhaltigen Komponente A) enthält.

11. Verfahren nach einem der vorhergehenden Ansprüche, wobei die wässrige Lösung 0,25 Gew.-% bis 1 Gew.-% der Komponente B) enthält.

12. Verfahren nach einem der vorhergehenden Ansprüche, wobei Molverhältnis der Komponente B, ausgewählt unter Säuren, Anhydriden oder Lactonen, zu den Aminoendgruppen (AEG) des Präpolymers 1:50 bis 1:5 ist.

## Claims

1. A process for preparing polyamides, comprising a solid phase postpolymerization of a polyamide prepolymer, wherein the polyamide prepolymer is contacted prior to and/or during the solid phase postpolymerization with an aqueous composition comprising at least the following components:
A) at least one first compound selected from the group consisting of phosphoric acid, fully neutralized salts of phosphoric acid, partly neutralized salts of phosphoric acid and mixtures thereof, and
B) at least one second compound other than A), where component B) comprises succinic acid or succinic anhydride or consists of succinic acid or succinic anhydride,
and wherein the polyamide prepolymer is contacted with the aqueous composition at a temperature and a pressure at which the aqueous composition is liquid,
wherein the molar ratio of component B to the reactive groups of the prepolymer is 1:50 to 1:5.

2. The process according to claim 1, in which the polyamide prepolymer is prepared by
a) providing an aqueous composition comprising at least one component which is suitable for polyamide formation and is selected from salts of at least one dicarboxylic acid and at least one diamine, lactams, ω-amino acids, aminocarbonitriles and mixtures thereof,
b) converting the composition provided in step a) in a polymerization at elevated temperature in the presence of water to obtain a polyamide prepolymer,
c) subjecting the polyamide prepolymer obtained in step b) to a shaping operation to obtain polyamide particles,
d) optionally subjecting the polyamide particles obtained in step c) to a workup,
e) using the polyamide particles obtained in step c) or in step d) for solid phase postpolymerization.

3. The process according to claim 2, wherein the workup in step d) comprises an extraction and/or a drying operation.

4. The process according to any of the preceding claims, wherein the polyamide is selected from PA 6, PA 11, PA 12, PA 46, PA 66, PA 666, PA 69, PA 610, PA 612, PA 96, PA 99, PA 910, PA 912, PA 1212, PA 6T, PA 9T, PA 10T, PA 12T, PA 61, PA 91, PA 10I, PA 121, PA 6T 61, PA MXD6, PA MACM I, PA MACM T, PA PACM I, PA PACM T and copolymers and mixtures thereof.

5. The process according to any of the preceding claims, wherein the aqueous composition is sprayed onto the polyamide prepolymer.

6. The process according to claim 5, wherein the spray application of the aqueous composition is effected continuously.

7. The process according to any of the preceding claims, wherein the aqueous composition is contacted with the polyamide prepolymer within a period of not more than 30 seconds, preferably of not more than 10 seconds.

8. The process according to any of the preceding claims, wherein the aqueous solution is distributed mechanically on the surface of the polyamide prepolymer.

9. The process according to claim 8, wherein the mechanical distribution is effected by means of mixing and dispersing elements, for example paddles, spirals, disks or hooks, especially with a paddle mixer.

10. The process according to any of the preceding claims, wherein the aqueous composition comprises 0.25% by weight to 1% by weight of at least one phosphorus-containing component A).

11. The process according to any of the preceding claims, wherein the aqueous solution comprises 0.25% by weight to 1% by weight of component B).

12. The process according to any of the preceding claims, wherein the molar ratio of component B, selected from acids, anhydrides or lactones, to the amino end groups (AEG) of the prepolymer is 1:50 to 1:5.

## Revendications

1. Procédé pour la préparation de polyamides, comprenant une post-polymérisation en phase solide d'un prépolymère de polyamide, le prépolymère de polyamide étant mis en contact, avant et/ou pendant la post-polymérisation en phase solide, avec une composition aqueuse qui comprend au moins les composants suivants :
A) au moins un premier composé, choisi dans le groupe constitué par l'acide phosphorique, des sels totalement neutralisés d'acide phosphorique, des sels partiellement neutralisés d'acide phosphorique et des mélanges correspondants, et
B) au moins un deuxième composé différent de A), le composant B) comprenant de l'acide succinique ou de l'anhydride d'acide succinique ou étant constitué d'acide succinique ou d'anhydride d'acide succinique,
et la mise en contact du prépolymère de polyamide avec la composition aqueuse étant réalisée à une température et une pression auxquelles la composition aqueuse est liquide,
le rapport molaire du composant B sur les groupes réactifs du prépolymère étant de 1:50 à 1:5.

2. Procédé selon la revendication 1, dans lequel, pour la préparation du prépolymère de polyamide,
a) on met à disposition une composition aqueuse qui contient au moins un composant approprié pour une formation de polyamide, qui est choisi parmi des sels d'au moins un acide dicarboxylique et au moins une diamine, des lactames, des acides ω-aminés, des nitriles d'acides aminocarboxyliques et des mélanges correspondants,
b) on transforme la composition mise à disposition dans l'étape a) dans une polymérisation à température élevée en présence d'eau avec obtention d'un prépolymère de polyamide,
c) on soumet le prépolymère de polyamide obtenu dans l'étape b) à un moulage avec obtention de particules de polyamide,
d) éventuellement on soumet les particules de polyamide obtenues dans l'étape c) à un traitement,
e) on utilise les particules de polyamide obtenues dans l'étape c) ou dans l'étape d) pour la post-polymérisation en phase solide.

3. Procédé selon la revendication 2, le traitement dans l'étape d) comprenant une extraction et/ou un séchage.

4. Procédé selon l'une quelconque des revendications précédentes, le polyamide étant choisi parmi PA 6, PA 11, PA 12, PA 46, PA 66, PA 666, PA 69, PA 610, PA 612, PA 96, PA 99, PA 910, PA 912, PA 1212, PA 6T, PA 9T, PA 10T, PA 12T, PA 6I, PA 9I, PA 10I, PA 12I, PA 6T 6I, PA MXD6, PA MACM I, PA MACM T, PA PACM I, PA PACM T et des copolymères et des mélanges correspondants.

5. Procédé selon l'une quelconque des revendications précédentes, la composition aqueuse étant pulvérisée sur le prépolymère de polyamide.

6. Procédé selon la revendication 5, la pulvérisation de la composition aqueuse étant réalisée en continu.

7. Procédé selon l'une quelconque des revendications précédentes, la composition aqueuse étant mise en contact avec le prépolymère de polyamide pendant un temps de maximum 30 secondes, préférablement de maximum 10 secondes.

8. Procédé selon l'une quelconque des revendications précédentes, la solution aqueuse étant répartie mécaniquement sur la surface du prépolymère de polyamide.

9. Procédé selon la revendication 8, la répartition mécanique étant réalisée au moyen d'éléments de mélange et de dispersion, comme par exemple des pales, des spirales, des disques ou des crochets, en particulier avec un mélangeur à pales.

10. Procédé selon l'une quelconque des revendications précédentes, la composition aqueuse contenant 0,25 % en poids à 1 % en poids d'au moins un composant A) contenant du phosphore.

11. Procédé selon l'une quelconque des revendications précédentes, la solution aqueuse contenant 0,25 % en poids à 1 % en poids du composant B).

12. Procédé selon l'une quelconque des revendications précédentes, le rapport molaire du composant B, choisi parmi des acides, des anhydrides ou des lactones, sur les groupes terminaux amino (AEG) du prépolymère étant de 1:50 à 1:5.
